# EUROPEAN PATENT APPLICATION

(11) **EP 0 949 304 A2**
(43) Date of publication of application: **13.10.1999**
(21) Application number: 99302769.7
(22) Date of filing: 09.04.1999
(51) Int. Cl.: C09C 3/10

(54) **Method of stabilizing an unsaturated fatty acid-treated inorganic compound and use thereof**

(30) Priority: 10.04.1998 JP 11627798
(71) Applicant: KYOWA CHEMICAL INDUSTRY CO., LTD., Takamatsu-shi Kagawa-ken (JP)
(72) Inventor: Hiraishi, Wataru, Kyowa Chemical Industry Co., Ltd, Takamatsu-shi, Kanagawa-ken (JP); Fujimoto, Kiyohiro, Kyowa Chem. Ind. Co., Ltd., Takamatsu-shi, Kanagawa-ken (JP); Negachi, Koichi, Kyowa Chem. Ind. Co., Ltd., Takamatsu-shi, Kanagawa-ken (JP)
(74) Representative: Woods, Geoffrey Corlett

(57) **Abstract**

A process for the production of surface-treated inorganic particles, comprising surface-treating the particles with an unsaturated fatty acid, wherein 0.001 to 0.5% by weight, based on the inorganic particles of phosphorus acid ester compound is added.

## Description

### Field of the Invention

The present invention relates to a method of stabilizing an unsaturated fatty acid-treated inorganic compound, which method causes no deterioration in quality for a long storage after the production, and relates to a synthetic resin composition containing the inorganic compound produced by the above method and a molded article therefrom. More specifically, it relates to a method of stabilizing an unsaturated fatty acid-treated inorganic compound, which method causes no color development and no performance deterioration of a molded article obtained from a synthetic resin composition containing the inorganic compound even when the inorganic compound is used after a long storage, and relates to a synthetic resin composition containing the inorganic compound produced by the above method and a molded article therefrom.

### Prior Art of the Invention

Conventionally, a variety of additives or fillers are incorporated in a synthetic resin composition for imparting it with optimum physical properties and stability for each of various uses. When an inorganic compound is used as an additive or filler, due to the poor compatibility of the inorganic compound with a synthetic resin compound having small polarity, such as polyolefins, the processability of a synthetic resin composition containing the inorganic compound is poor and the dispersibility of the inorganic compound in the resin is also poor. As a result, it is hard to obtain a molded article having excellent appearance and physical properties. Therefore, when an inorganic compound having strong polarity is used as an additive or filler for a synthetic resin, the surface of the inorganic compound is improved with an organic compound in order to improve the compatibility of the inorganic compound with the synthetic resin. This technique is generally known. Even when a surface-improved inorganic compound in a large amount is incorporated into a synthetic resin, an obtained molded article can maintain its practical physical properties and appearance.

As a surface-treating agent used for improving the surface of an inorganic compound, anion type or cation type surfactants are generally known. It is also well known that surfactants, higher fatty acids and a variety of coupling agents which have unsaturated bonds, such as a vinyl group, are used as a surface-treating agent not only for merely improving the compatibility of an inorganic compound with a synthetic resin and increasing the dispersibility thereof but also for forming chemical bonds between the inorganic compound and a base polymer on purpose to reinforce physical properties. Further, additives and fillers obtained from these inorganic compounds surface-treated with an unsaturated organic substance are widely used in a particular use field of a synthetic resin composition due to the specific properties thereof.

Among compounds used as a surface-treating agent for an inorganic compound, unsaturated organic compounds having a vinyl group or an alkenyl group chemically have the advantage of a high reaction activity. On the other hand, these unsaturated organic compounds also have the defect that these unsaturated organic compounds are likely to be changed by heat, light or oxygen in the air and are unstable. Therefore, when additives and fillers obtained from inorganic compounds surface-treated with an unsaturated organic compound are used after a long storage, there are sometimes caused the deterioration of a synthetic resin compound in whiteness degree and in processability and the decrease of a molded article in mechanical strength.

### Summary of the Invention

It is an object of the present invention to provide a method of stabilizing an unsaturated fatty acid treated-inorganic compound, which method can give an unsaturated fatty acid treated-inorganic compound that causes no deterioration in quality for a long storage, and an inorganic compound obtained by the above method.

It is another object of the present invention to provide a method of stabilizing an unsaturated fatty acid treated-inorganic compound, which method can give an unsaturated fatty acid treated-inorganic compound that causes no color development and no performance deterioration of a synthetic resin composition containing the unsaturated fatty acid treated-inorganic compound even when the inorganic compound is used after a long storage.

It is further another object of the present invention to provide a synthetic resin composition obtained by incorporating the above unsaturated fatty acid treated-inorganic compound into a synthetic resin, which composition can give a molded article free from the deterioration in whiteness degree, processability and mechanical strength, and a molded article obtained from the above synthetic resin composition.

According to the present invention, there is provided a method of stabilizing an unsaturated inorganic compound in a process for the production of a surface-improved inorganic compound comprising surface-treating the compound with an unsaturated fatty acid, wherein 0.001 to 0.5 % by weight, based on the inorganic compound, of phosphorus acid ester compound is added.

According to the present invention, there is further provided a synthetic resin composition containing 100 parts by weight of synthetic resin and 1 to 300 parts by weight of the unsaturated fatty acid-treated inorganic compound obtained by the above method.

According to the present invention, there is still further provided a molded article obtained from the above synthetic resin composition.

According to the present invention, there is furthermore provided an unsaturated fatty acid-treated inorganic compound obtained by the above method.

### Detailed Description of the Invention

The present inventors have found that when an unsaturated fatty acid-treated inorganic compound after a long storage is used as a filler, etc., for a synthetic resin, the performance of an obtained resin composition is changed as compared with the case of using the unsaturated fatty acid-treated inorganic compound right after the production, and have made a study of the causes thereof. As a result, the present inventors have found the problem that the unsaturated fatty acid used as a surface-treating agent is varied with time and the content thereof is decreased. Then, the present inventors have studied measures for preventing the time-varying of the surface-treating agent of the unsaturated organic compound and have found that the above problem can be solved by incorporating a kind of antioxidant in a very small amount. And, the present invention has been accomplished.

The phosphorus acid ester compound suitable for use in the present invention includes compounds generally used for a synthetic resin, etc., as an antioxidant. Examples of these include triphenylphosphite, diphenyl·tridecylphosphite, phenyl·ditridecylphosphite, phenyl·isodecylphosphite, tri·nonylphenylphosphite, 4,4'-butylidene-bis(3-methyl- 6-t-butylphenyl-ditridecylphosphite, trilaurylthiophosphite, etc.

The amount of the phosphorus acid ester compound is 0.001 to 0.5 % by weight, preferably 0.005 to 0.2 % by weight, based on the inorganic compound. When the amount of the phosphorus acid ester compound is lager than the upper limit of the above range, the stabilization effect is unchanging. When it is less than the lower limit of the above range, the stabilization effect is insufficient.

The inorganic compound, to which the stabilization method of the present invention is applied, include metal hydroxides, metal carbonates, basic metal carbonates, basic metal sulfates, metal oxides, etc. Examples of these include aluminum hydroxide, a hydrotalcite compound, magnesium hydroxide, a complex solid solution hydroxide represented by Mg₁₋ₓMₓ (OH)₂, wherein M is a divalent metal such as Mn, Co, Ni or Zn and X is a number of X<1, calcium carbonate, magnesium carbonate, basic magnesium carbonate, basic magnesium sulfate, magnesia, alumina, titania, hydrozincite, zinc borate and a chalco alumite type compound. The inorganic compound used in the present invention has no special limitation. In order to be suitably surface-treated with fatty acids, inorganic compounds having a plus surface charge and inorganic compounds containing metal ions having strong compatibility with fatty acids are suitable for use in the present invention. When the inorganic compound is incorporated into a synthetic resin, a preferable inorganic compound, etc., is as follows. For example, when the inorganic compound is magnesium hydroxide, particles having an average secondary particle diameter of 2 µm or less and a BET specific surface area of 15 m²/g or less are preferred. Further, the primary crystal particle of magnesium hydroxide preferably has a shape of hexagonal platelet. When the inorganic compound is a hydrotalcite compound, particles having an average secondary particle diameter of 4 µm or less and a BET specific surface area of 40 m²/g or less are preferred.

Examples of the unsaturated fatty acid, used as a surface-treating agent for the inorganic compound in the present invention, include oleic acid, ricinoleic acid and erucic acid. The surface-treatment method includes a wet process and a dry process. Each of these may be used, while the wet treatment process is preferred in that the wet treatment process can carry out the surface-treatment more uniformly. The amount of the unsaturated fatty acid is preferably 0.05 to 10 parts by weight, more preferably 0.1 to 5 parts by weight, per 100 parts by weight of the inorganic compound.

There is no special limitation about a method of adding the phosphorus acid ester compound in the present invention. The method may be any one so long as it can uniformly mix the phosphorus acid ester compound with the inorganic compound or with the unsaturated fatty acid-treated inorganic compound. For example, when a phosphorus acid ester is used in a powder state, the phosphorus acid ester may be dry-mixed with the dry powder of an unsaturated fatty acid-treated inorganic compound in a Henschel mixer. It is most preferable to add a phosphorus acid ester compound at a time of surface-treating a slurry of an inorganic compound with an aqueous solution of an unsaturated fatty acid by the wet process, since these are mixed uniformly. In this case, the phosphorus acid ester compound may be added by itself. However, preferable is a method wherein an aqueous emulsion is prepared by adding a small amount of a nonion type surfactant to a phosphorus acid ester compound and the aqueous emulsion is added or a method wherein the same aqueous emulsion as above is mixed with an aqueous solution of an unsaturated fatty acid in advance and the mixture is added and mixed concurrently with surface-treatment.

The synthetic resin used in the present invention includes polyolefins, polyamides, polyesters, epoxy resins, etc. Specifically, it includes an ethylene-propylene copolymer, a propylene homopolymer, polybutene-1, an ethylene-propylene-diene elastomer, an ethylene-propylene elastomer, low-density polyethylene, medium-density polyethylene, high-density polyethylene, linear-low-density polyethylene, ultra-low-density polyethylene, an ethylene-vinyl acetate copolymer, an ethylene-ethyl acrylate copolymer, polystyrene, ABS, polyolefin-containing thermoplastic elastomers such as polypropylene-containing thermoplastic elastomer, polyethylene-containing thermoplastic elastomer and polystyrene-containing thermoplastic elastomer, epoxy resins such as a bisphenol A type epoxy resin, a cresol novolak type epoxy resin, a phenol novolak type epoxy resin, a biphenyl type epoxy resin, a naphthalene ring-containing epoxy resin, an allyl phenol novolak type epoxy resin, an alicyclic epoxy resin, a heterocyclic epoxy resin and halides of these, polyamide resins such as polyamide 6, polyamide 66, polyamide 610, polyamide 12 and polyamide 46, polyurethane, HIPS, PS, and polyester.

The methods for measuring the values of a variety of characteristic properties will be explained.

Quantitation of an unsaturated fatty acid:
An unsaturated fatty acid-treated inorganic compound is acid-treated in a separating funnel and a diethyl ether is added. The mixture is subjected to a solvent-extraction, to obtain an extract solution. The solvent is volatilized by subjecting the extract solution to a hot water bath, to obtain an oily material. The oily material is weighed accurately in a predetermined amount. N,N-dimethylamidedimethylacetal is added as an esterifying agent. The mixture is stirred well, and then methyl-esterified by heating with a mantle heater at 60 °C for 15 minutes. Then, a quantitative analysis is carried out with a gas chromatograph (supplied by Shimazu Seisakujo, "GC-14B").

Measurement of an average secondary particle diameter of an inorganic compound:
Measured for particle size distribution according to a laser diffraction scattering method, to obtain an average secondary particle diameter.

Specific surface area of an inorganic compound:
Measured according to a BET method.

The present invention will be explained more in detail with reference to Examples.

### Examples 1 to 5

An emulsion was prepared by adding a small amount of polyoxyethylenenonylphenylether to an aqueous solution of diphenyltridecylphosphite in a predetermined amount % by weight, shown in Table 1. 2 % by weight, based on the following magnesium hydroxide, of oleic acid treating liquid and the emulsion were added to a suspension of magnesium hydroxide having an average secondary particle diameter of 0.8 µm and a BET specific surface area of 6.0 m²/g, while stirring. The mixture was stirred for 30 minutes, then filtrated, dehydrated, dried and pulverized, to obtain a surface-treated product.

Each of the so-obtained surface-treated magnesium hydroxides was stored in a room for three months. Then, the content of the oleic acid was quantitatively analyzed for investigating the retaining ratio thereof with the passage of time. Table 1 shows the results.

**Table 1**

| Example | 1 | 2 | 3 | 4 | 5 |
|---|---|---|---|---|---|
| Amount of phosphorus acid ester (% by weight) | 0. 005 | 0.01 | 0.05 | 0.1 | 0.2 |
| Retaining ratio (%) | 69 | 70 | 75 | 81 | 81 |

| | | | | | |
|---|---|---|---|---|---|
| Note: "Retaining ratio" represents a value obtained by considering the initial oleic acid content in the treating agent as 100. | | | | | |

### Comparative Example 1

Magnesium hydroxide was surface-treated with about 2 % by weight of oleic acid in the same manner as in Example 1 except that the diphenyltridecylphosphite was not added. The surface-treated magnesium hydroxide was investigated for the time-varying of the content of the oleic acid component. The magnesium hydroxide used had an average secondary particle diameter of 0.8 µm and a BET specific surface area of 6.5 m²/g. Table 2 shows the results.

**Table 2**

| Sample No. | B-1 | B-2 | B-3 | B-4 | B-5 | B-6 | B-7 |
|---|---|---|---|---|---|---|---|
| Passed days (day) | 14 | 85 | 105 | 195 | 250 | 380 | 773 |
| Retaining ratio (%) | 76 | 66 | 43 | 28 | 16 | 15 | 5 |

| | | | | | | | |
|---|---|---|---|---|---|---|---|
| Note: "Retaining ratio" represents a value obtained by considering the initial oleic acid content in the treating agent as 100. | | | | | | | |

### Example 6

2 % by weight, based on the amount of magnesium hydroxide, of oleic acid treating solution was added to an aqueous slurry of magnesium hydroxide while stirring. Then 0.1 % by weight of an aqueous solution of diphenyltridecylphosphite was added, and the mixture was stirred for 30 minutes, then, dehydrated, dried and pulverized to obtain a surface-treated product. The obtained surface-treated product was investigated for the time-varying of the content of the oleic acid. The used magnesium hydroxide had an average secondary particle diameter of 0.8 µm and a BET specific surface area of 6.5 m²/g. Table 3 shows the results.

**Table 3**

| Sample No. | A-1 | A-2 | A-3 |
|---|---|---|---|
| Passed days (day) | 25 | 350 | 730 |
| Retaining ratio (%) | 84 | 80 | 76 |

### Example 7, Comparative Example 2

According to the following incorporation amounts, each sample of the oleic acid-treated magnesium hydroxides having different "Passed days", which were obtained in Comparative Example 1 and Example 6, was kneaded with ethylene-propylene copolymer (EP copolymer, hereinafter) by the use of an extruder. Then, test pieces were obtained therefrom with an injection molding machine. The test pieces were used for measuring various physical properties. Table 4 shows the results.

| | |
|---|---|
| EP copolymer (BC-6, supplied by Mitsubishi Kagakusha) | 100 parts by weight |
| Sample | 150 parts by weight |
| DLTP (dilaurylthiodipropionate: supplied by Yoshitomi Seiyakusha) | 0.25 part by weight |
| Irganox 1010 (supplied by Ciba Geigy) | 0.25 part by weight |

| | |
|---|---|
| Note: Irganox 1010:tetrakiss[methylene-3(3,5-di-tert-butyl-4-hydroxy-phenyl)propionate]methane. | |

**Table 4**

| Sample | B-1 | B-7 | A-1 | A-3 |
|---|---|---|---|---|
| Tensile strength (kgf/mm²) | 1.90 | 2.30 | 1.95 | 1.90 |
| Extension (%) | 45 | 5 | 50 | 45 |
| Bending strength (kgf/mm²) | 3.70 | 4.28 | 3.80 | 3.85 |
| Bending elastic modulus (kgf/mm²) | 450 | 548 | 440 | 440 |
| MFI (g/10min) | 6.0 | 1.2 | 6.0 | 5.5 |
| Izod impact strength (kgf·cm/cm) | 13 | 3.8 | 15 | 15 |
| Flame retardancy | ○ | ○ | ○ | ○ |
| Acid resistance | ○ | × | ○ | ○ |

| | | | | |
|---|---|---|---|---|
| Note: ○: equivalent to B-1, Δ: a little inferior to B-1, ×: largely inferior to B-1 | | | | |

The resin composition containing "Sample B-7", which was used after about two years storage from the production, and the molded article therefrom showed low values of MFI and were largely poor in processability. Further, high values were shown in tensile strength and bending elastic modulus. In contrast, low values were shown in extension and impact strength. The above resin composition and the molded article therefrom were firm and fragile. Further, only in the case with "Sample B-7", it was found that there was slightly precipitated a dirt around a discharge outlet on a die, which outlet was discharging a strand at a kneading time with an extruder. From this fact, it can be supposed that the unsaturated fatty acid was modified to generate an oxidate and the oxidate caused a gum.

The resin composition containing "Sample A-3" of the present invention, which was used after about two years storage from the production, and the molded article therefrom had processability and mechanical strength equivalent to those right after the production.

### Effect of the Invention

According to the present invention, there is provided an unsaturated fatty acid-treated inorganic compound excellent in stability for a long storage, which compound cause no deterioration in whiteness degree, mechanical strength and processability of a molded article obtained from a synthetic resin composition containing the unsaturated fatty acid-treated inorganic compound after a long storage. Further, there is provided a synthetic resin composition containing the above inorganic compound.

## Claims

1. A process for the production of surface-treated inorganic particles, comprising surface-treating the particles with an unsaturated fatty acid, wherein 0.001 to 0.5% by weight, based on the inorganic particles, of phosphorus acid ester compound is added.

2. A process according to claim 1, wherein the inorganic particles are selected from metal hydroxides, metal carbonates, basic metal carbonates, basic metal sulfates, and metal oxides.

3. A process according to claim 1 or 2, wherein the inorganic particles are first treated with the fatty acid and then the phosphorus acid ester compound is added and mixed.

4. A process according to claim 1 or 2, wherein the phosphorus acid ester compound is added at the same time as the inorganic particles are treated with fatty acid.

5. A process according to any one of the preceding claims, wherein the phosphorus acid ester compound is added by itself or as an aqueous emulsion containing a nonion type surfactant.

6. A process according to any one of the preceding claims, wherein the unsaturated fatty acid is at least one selected from oleic acid, ricinoleic acid and erucic acid.

7. A process according to claim 6, wherein the unsaturated fatty acid is oleic acid.

8. A process according to any one of the preceding claims, wherein the inorganic particles are magnesium hydroxide particles which have an average secondary particle diameter of 2 µm or less, a BET specific surface area of 15 m²/g or less and a primary crystal particle shape of hexagonal platelet, or the inorganic particles are particles of a hydrotalcite compound having an average secondary particle diameter of 4 µm or less and a BET specific surface area of 40 m²/g or less.

9. A synthetic resin composition containing 100 parts by weight of a synthetic resin and 1 to 300 parts by weight of inorganic particles obtained by a process according to any one of the preceding claims.

10. A molded article obtainable by moulding the synthetic resin composition of claim 9.

11. Unsaturated fatty acid-treated inorganic particles obtainable by a process according to any one of claims 1 to 8.

12. Use of a phosphorus acid ester compound to stabilize fatty acid treated inorganic particles.
